# EUROPEAN PATENT APPLICATION

(11) **EP 4 506 742 A1**
(43) Date of publication of application: **12.02.2025**
(21) Application number: 23829641.2
(22) Date of filing: 20.04.2023
(51) Int. Cl.: G02B 6/44, B65H 75/24

(54) **FIBRE-COILING APPARATUS, AND COMMUNICATION DEVICE ASSEMBLY**

(30) Priority: 30.06.2022 CN 202210769792
(71) Applicant: ZTE Corporation, Shenzhen, Guangdong 518057 (CN)
(72) Inventor: XU, Xianghui, Shenzhen, Guangdong 518057 (CN); YAO, Shibin, Shenzhen, Guangdong 518057 (CN); GENG, Zhaogang, Shenzhen, Guangdong 518057 (CN)
(74) Representative: Canzler & Bergmeier Patentanwälte Partnerschaft mbB
(86) International application number: PCT/CN2023/089513
(87) International publication number: WO 2024/001453

(57) **Abstract**

A fibre-coiling apparatus, and a communication device assembly with the fibre-coiling apparatus. The fibre coiling apparatus comprises a supporting member (1) and at least two fibre-coiling members (2), wherein a slideway (11) is provided on the supporting member (1); and the fibre-coiling member (2) comprises a fibre-coiling column (21) and a sliding block (22), which are connected to each other, the fibre-coiling column (21) being used for winding optical fibers thereon, and the sliding block (22) being capable of sliding along the slideway (11) and being positioned at any position of the slideway (11).

## Description

### CROSS REFERENCE TO RELATED APPLICATIONS

The present disclosure claims the priority to Chinese Patent Application No. CN202210769792.3 entitled "FIBER-COILING DEVICE AND COMMUNICATION DEVICE ASSEMBLY" and filed with the CNIPA on June 30, 2022, the contents of which are incorporated herein by reference in their entirety.

### TECHNICAL FIELD

Embodiments of the present disclosure relate to, but are not limited to, the field of fiber coiling technology, and in particular to a fiber-coiling device and a communication device assembly having the fiber-coiling device.

### BACKGROUND

Optical fibers are often used for transmitting information in communication equipment (such as a communication device and an IT device). In order to adapt to different working conditions, an actual length of an optical fiber is often greater than what is needed, and the excessive optical fiber may be coiled around a fiber-coiling device so as to be stored and arranged.

In some related arts, the fiber-coiling device cannot be adjusted once it exceeds a coiled-fiber capacity limit, which causes inconvenience in use; or the fiber-coiling device may have a complicated structure.

### SUMMARY

The present disclosure provides a fiber-coiling device and a communication device assembly having the fiber-coiling device.

In a first aspect, an embodiment of the present disclosure provides a fiber-coiling device, including a supporting member and at least two fiber-coiling members, with the supporting member provided with a slideway; each of the at least two fiber-coiling member includes a fiber-coiling column and a sliding block which are connected to each other; and the fiber-coiling column is used for an optical fiber to coil around, and the sliding block is capable of sliding along the slideway and being positioned at any position of the slideway.

In a second aspect, an embodiment of the present disclosure provides a communication device assembly, including: a communication device; and at least one fiber-coiling device connected to the communication device, with the fiber-coiling device being the fiber-coiling device provided in any embodiment of the present disclosure.

### BRIEF DESCRIPTION OF DRAWINGS

In the drawings of the embodiments of the present disclosure:
FIG. 1 is a schematic structural diagram of a fiber-coiling device according to an embodiment of the present disclosure;
FIG. 2 is a schematic structural diagram of a supporting member in a fiber-coiling device according to an embodiment of the present disclosure;
FIG. 3 is another schematic structural diagram of a supporting member in a fiber-coiling device according to an embodiment of the present disclosure;
FIG. 4 is a schematic structural diagram of a fiber-coiling member in a fiber-coiling device according to an embodiment of the present disclosure;
FIG. 5 is another schematic structural diagram of a fiber-coiling member in a fiber-coiling device according to an embodiment of the present disclosure;
FIG. 6 is a schematic structural diagram of a sliding block in a fiber-coiling device according to an embodiment of the present disclosure;
FIG. 7 is a sectional view illustrating cooperation of a sliding block and a slideway in a fiber-coiling device according to an embodiment of the present disclosure;
FIG. 8 is a schematic structural diagram of a communication device assembly according to an embodiment of the present disclosure;
FIG. 9 is another schematic structural diagram of a communication device assembly according to an embodiment of the present disclosure;
FIG. 10 is a schematic diagram illustrating a fiber coiling implementation of a fiber-coiling device according to an embodiment of the present disclosure;
FIG. 11 is a schematic diagram illustrating another fiber coiling implementation of a fiber-coiling device according to an embodiment of the present disclosure;
FIG. 12 is a schematic diagram illustrating loosening an optical fiber in a fiber-coiling device according to an embodiment of the present disclosure; and
FIG. 13 is a schematic diagram illustrating tightening an optical fiber in a fiber-coiling device according to an embodiment of the present disclosure.

In the drawings, the reference numerals are:
1-supporting member; 11-slideway; 111-first slideway; 112-second slideway; 119-convex edge; 2-fiber-coiling member; 21-fiber-coiling column; 211-limiting protrusion; 22-sliding block; 221-chute; 222-first sheet; 223-second sheet; 224-connecting cylinder; 23-locking screw; 3-communication device.

### DETAIL DESCRIPTION OF EMBODIMENTS

In order to enable those of ordinary skill in the art to better understand the technical solutions of the present disclosure, a fiber-coiling device and a communication device assembly provided in the embodiments of the present disclosure are described in detail below with reference to the drawings.

The present disclosure will be described more fully below with reference to the drawings, but the embodiments illustrated may be embodied in different forms, and the present disclosure should not be interpreted as being limited to the embodiments described herein. Rather, the embodiments are provided to make the present disclosure thorough and complete, and are intended to enable those of ordinary skill in the art to fully understand the scope of the present disclosure.

The drawings for the embodiments of the present disclosure are intended to provide a further understanding of the embodiments of the present disclosure and constitute a part of the specification. Together with specific embodiments of the present disclosure, the drawings are used to explain the present disclosure, but do not constitute any limitation to the present disclosure. The above and other features and advantages will become more apparent to those of ordinary skill in the art from the description of specific embodiments with reference to the drawings.

The present disclosure can be described with reference to plans and/or cross-sectional views with the aid of idealized schematic diagrams of the present disclosure. Accordingly, the exemplary drawings may be modified according to manufacturing techniques and/or tolerances.

All the embodiments of the present disclosure and the features therein may be combined with each other if no conflict is incurred.

The terms used herein are merely used to describe specific embodiments, and are not intended to limit the present disclosure. The term "and/or" used herein includes one associated listed item or any and all combinations of more than one associated listed items. The terms "one" and "the" used herein which indicate a singular form are intended to include a plural form, unless expressly stated in the context. The terms "include" and "be made of" used herein indicate the presence of the described features, integers, operations, elements and/or components, but do not exclude the presence or addition of one or more other features, integers, operations, elements, components and/or combinations thereof.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein

The present disclosure are not limited to the embodiments illustrated by the drawings, but include modifications to configuration formed based on a manufacturing process. Thus, regions shown in the drawings are illustrative, and shapes of the regions shown in the drawings illustrate specific shapes of regions of elements, but are not intended to make limitations.

In some related arts, fiber-coiling devices used for storing and arranging optical fibers are classified into two types, i.e., a fixed fiber-coiling device and an adjustable fiber-coiling device.

The fixed fiber-coiling device is provided with fiber-coiling plates with fixed positions, and the optical fibers are coiled around the two fiber-coiling plates. However, since the positions of the fiber-coiling plates are fixed and an interval between the fiber-coiling plates is also fixed, the coiled-fiber capacity limit cannot be adjusted. If an optical fiber is not long enough, the optical fiber may not be coiled around the fiber-coiling plates; and if the optical fiber is too long, not all the optical fiber may be coiled around the fiber-coiling plates. The fixed fiber-coiling device has a small application range and is inconvenient to use in practical applications.

The adjustable fiber-coiling device is provided with fiber-coiling plates with adjustable positions, so that the coiled-fiber capacity limit of the adjustable fiber-coiling device can be adjusted as required. However, in order to adjust the positions of the fiber-coiling plates, positioning parts such as springs need to be disposed in the adjustable fiber-coiling device, such that the adjustable fiber-coiling device has the disadvantages of large number of parts, complicated structure, and poor engineering usability and reliability (for example, the springs are prone to fail).

In a first aspect, an embodiment of the present disclosure provides a fiber-coiling device.

The fiber-coiling device provided in the embodiment of the present disclosure is used for an optical fiber, such as an optical fiber of a communication device 3, to coil around, so as to store and arrange the optical fiber.

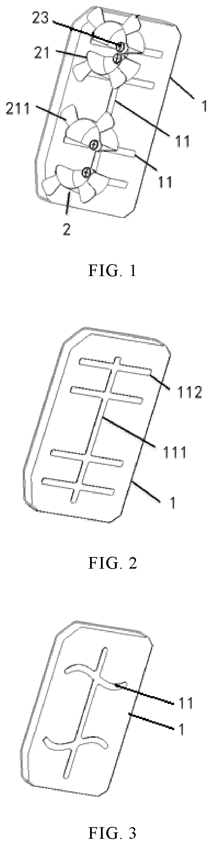

Referring to FIG. 1, the fiber-coiling device according to the embodiment of the present disclosure includes a supporting member 1 provided with a slideway 11, and at least two fiber-coiling members 2; each of the fiber-coiling members 2 includes a fiber-coiling column 21 and a sliding block 22 which are connected to each other; and the fiber-coiling column 21 is used for the optical fiber to coil around, and the sliding block 22 is capable of sliding along the slideway 11 and being positioned at any position of the slideway 11.

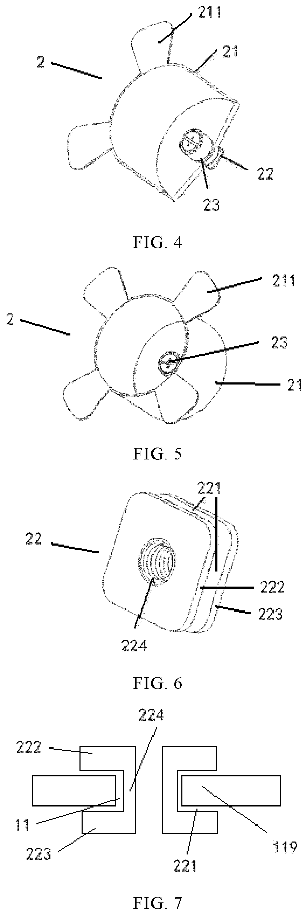

Referring to FIG. 1, the fiber-coiling device provided in the embodiment of the present disclosure is provided with at least two fiber-coiling members 2. Referring to FIG. 4, each fiber-coiling member 2 includes the fiber-coiling column 21 connected to the sliding block 22, the fiber-coiling column 21 is used for the optical fiber to coil around, and the sliding block 22 is capable of sliding along the slideway 11 of the supporting member 1 and being positioned at a desired position of the slideway 11.

The fiber-coiling column 21 may be implemented in various specific forms, and connected to the sliding block 22 in various ways.

For example, referring to FIG. 4, the fiber-coiling column 21 may be a hollow and uncovered "half cylinder", and the sliding block 22 is connected to the middle of a bottom surface of the fiber-coiling column 21. For example, referring to FIG. 5, the fiber-coiling column 21 may be a hollow and uncovered "cylinder", and the sliding block 22 is connected to the middle of a bottom surface of the fiber-coiling column 21. For example, the sliding block 22 may be connected to a side of the fiber-coiling column 21. For example, the sliding block 22 may be connected to the fiber-coiling column 21 by means of welding, snapping, etc., or the fiber-coiling column 21 and the sliding block 22 may be an integral structure.

In the embodiments of the present disclosure, the sliding block 22 being positioned at a certain position is equivalent to the fiber-coiling column 21 being positioned at such position. Thus, the arrangement of the fiber-coiling column 21 may be adjusted according to a quantity of the optical fiber, so as to realize adjustment of the coiled-fiber capacity limit, expand an application range, and enhance practicability. Moreover, according to the embodiments of the present disclosure, the movement of the fiber-coiling column 21 is realized through the simple structures of the slideway 11 and the sliding block 22, which allows the product to have the advantages of simple structure, less parts, high universality and reliability, and good engineering usability.

In some embodiments, the supporting member 1 is in a shape of a plate; and the slideway 11 is a groove or a through groove formed in the supporting member 1.

Referring to FIG. 2, in an implementation of the embodiments of the present disclosure, the supporting member 1 may be a plate-like structure (a supporting plate), and a groove not penetrating the plate-like structure or a through groove penetrating the plate-like structure is formed on a main surface of the plate-like structure to serve as the slideway 11.

It should be understood that a specific form of the supporting member 1 is not limited to the plate-like structure. For example, the supporting member 1 may be in a form of a "strip-like structure" or a "bracket" merely corresponding to a position of the slideway 11.

It should be understood that a specific form of the slideway 11 is not limited to the groove or the through groove. For example, the slideway 11 may be a "rail" projecting from a surface of the supporting member 1.

In some embodiments, the slideway 11 is provided at a plurality of positions in a first direction, and is provided at a plurality of positions in a second direction; and the first direction and the second direction are both parallel to a surface where the slideway 11 is located and cross each other.

In some embodiments, the slideway 11 includes a first slideway 111 extending in the first direction and a second slideway 112 extending in the second direction; and the first slideway 111 and the second slideway 112 cross each other.

In an implementation of the embodiments of the present disclosure, the slideway 11 may not be distributed along merely one direction, but may be distributed at different positions in two directions; accordingly, the supporting member 1 may not be distributed merely along one straight line, but may be adjusted to a plurality of different positions in a plane to form different patterns as required. For example, a plurality of fiber-coiling members 2 may be distributed in the supporting member 1 in the form of vertices of a triangle or a quadrangle.

Specifically, referring to FIG. 2, the slideway 11 may include the first slideway 111 and the second slideway 112 which are extended in different directions, and the first slideway 111 and the second slideway 112 cross each other, so that the fiber-coiling member 2 may be moved from one kind of slideway 11 to the other kind of slideway 11 at an intersection to realize movement in different directions.

In some embodiments, the number of the first slideway is one; the number of second slideways is more than one; and each second slideway crosses the first slideway.

In an implementation of the embodiments of the present disclosure, referring to FIG. 2, merely one first slideway 111 is provided, and the plurality of second slideways 112 all cross the first slideway 111, so that the different second slideways 112 are corresponding to the different positions in the first direction, and different positions on each second slideway 112 are corresponding to different positions in the second direction.

It should be understood that the specific form of the slideway 11 is not limited to the above. For example, referring to FIG. 3, instead of the form of a "straight line", the slideway 11 may be in other forms such as a "wavy" form.

In some embodiments, at least three fiber-coiling members 2 are provided.

In an implementation of the embodiments of the present disclosure, instead of providing merely two fiber-coiling members 2, three or more fiber-coiling members 2 are provided (FIG. 1 illustrates the example of four fiber-coiling members 2). Thus, a plurality of fiber-coiling members 2 may be arranged in more different forms, and the optical fiber may be coiled around the fiber-coiling members 2 in more different ways. For example, four fiber-coiling members 2 may be distributed at four vertices of a quadrangle, so that the optical fiber may be coiled around the four fiber-coiling members 2 along the sides of the quadrangle. For example, the four fiber-coiling members 2 may be divided into two groups each including two fiber-coiling members 2 and different optical fibers are coiled around the different groups of fiber-coiling members 2.

In some embodiments, a chute 221 is provided at a side surface of the sliding block 22. The slideway 11 includes a convex edge 119 extending into the chute 221.

Referring to FIG. 6 and FIG. 7, in an implementation of the embodiments of the present disclosure, the chute 221 may be provided at the side surface of the sliding block 22, and the convex edge 119 of the slideway 11 may extend into the chute 221, so as to allow the sliding block 22 to slide along the slideway 11.

In some embodiments, the sliding block 22 includes a first sheet 222 and a second sheet 223 disposed apart from each other; the first sheet 222 is connected to the second sheet 223 with a hollow connecting cylinder 224, and a space between the first sheet 222 and the second sheet 223 and outside the connecting cylinder 224 forms the chute 221; and internal threads are provided on an inner side of the connecting cylinder 224, and a locking screw 23 matched with the internal threads is inserted into the connecting cylinder 224.

Referring to FIG. 6 and FIG. 7, in an implementation of the embodiments of the present disclosure, the sliding block 22 may include two sheet-like structures (the first sheet 222 and the second sheet 223) which are connected to each other with the connecting cylinder 224, so that the space between the two sheet-like structures (also outside the connecting cylinder 224) forms the chute 221; and the connecting cylinder 224 is hollow and is provided with the internal threads, and the locking screw 23 (e.g., in the form of a self-locking screw) having matched external threads is inserted into the connecting cylinder 224. Thus, when the locking screw 23 is tightened, which is equivalent to applying a force pressing the two sheet-like structures together, the sheet-like structures can "clamp" the convex edge 119 to position the sliding block 22 (that is, positioning the fiber-coiling member 2).

It should be understood that specific forms of the sliding block 22 and the chute 221 and a positioning method of the sliding block 22 are not limited to the above example. For example, the convex edge 119 of the slideway 11 may be an edge of the plate-like supporting member 1 at the slideway 11 as shown in FIG. 7, or the convex edge 119 of the slideway 11 may be a separate structure capable of extending into the chute 221. For example, the chute 221 may be provided at a sidewall of the slideway of the supporting member 1, and the convex edge 119 may be provided at a side surface of the sliding block 22 and extend into the chute 221. For example, the sliding block 22 may be positioned in the chute by means of snapping, attachment, etc.

In some embodiments, a limiting protrusion 211 is provided at an outer side surface of an end of the fiber-coiling column 21 away from the supporting member 1.

Referring to FIG. 4, in an implementation of the embodiments of the present disclosure, the limiting protrusion 211, which projects outwards, is provided on a side of the fiber-coiling column 21 away from the supporting member 1, so as to prevent the optical fiber coiled around the fiber-coiling column 21 from falling off the fiber-coiling column 21.

In a second aspect, an embodiment of the present disclosure provides a communication device assembly, including: a communication device 3; and at least one fiber-coiling device connected to the communication device 3, with the fiber-coiling device being the fiber-coiling device provided in any embodiment of the present disclosure.

The communication device 3 refers to any device that needs to use an optical fiber so as to be endowed with a capability of communicating through the optical fiber. For example, the communication device 3 may be a communication device for realizing wired or wireless communication, and may also be an IT device.

The fiber-coiling device provided in the embodiments of the present disclosure may be disposed on the communication device 3 and used for an optical fiber used by the communication device 3 to coil around.

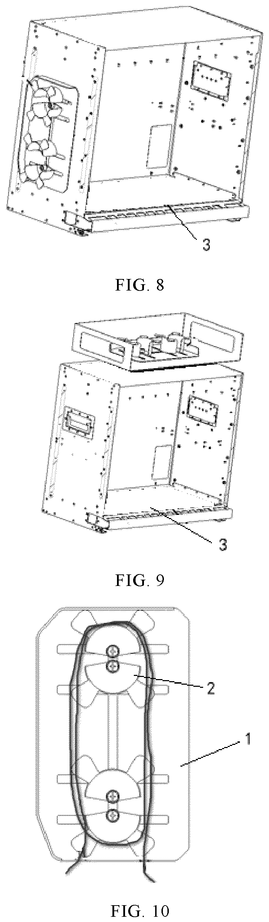

Referring to FIG. 8 and FIG. 9, the fiber-coiling device may be disposed on a side surface or a top surface of a main body of the communication device 3, or may be disposed in an adjustable space inside the communication device.

After the fiber-coiling device is mounted to the communication device 3, according to a quantity of optical fibers to be coiled, the positions of the fiber-coiling members 2 are adjusted and a specific fiber coiling mode is determined.

For example, when a small number of optical fibers are left on site, a coiling operation may be actually performed using two fiber-coiling members 2, and the optical fibers may be directly coiled around outer sides of the two fiber-coiling members 2 as shown in FIG. 10.

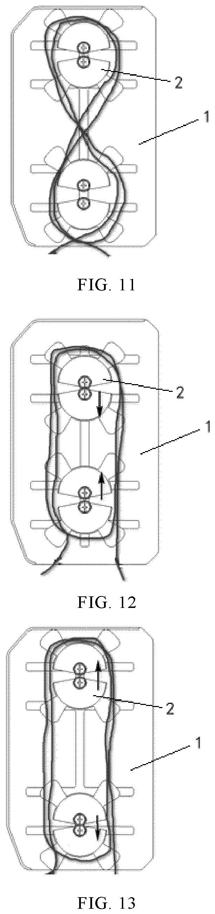

When a large number of optical fibers are left on site, the coiling operation may be actually performed using four fiber-coiling members 2, every two fiber-coiling members 2 may be set into one group and are arranged close to each other, and the optical fibers may be coiled around the four fiber-coiling members 2 in a figure of "8" as shown in FIG. 11.

When a larger number of optical fibers are left on site, the positions of the fiber-coiling members 2 may be adjusted. For example, four fiber-coiling members 2 are positioned at four vertices of a quadrangle, and the optical fibers are coiled around an outer side of the quadrangle.

When a new optical fiber needs to be added to the existing optical fibers due to capacity expansion of a field device, referring to FIG. 12, the locking screws 23 are first loosened, the two fiber-coiling members 2 are moved towards each other (see the arrows in FIG. 12), a tail fiber at the communication device is pulled off, and the newly added optical fiber is arranged on the fiber-coiling members 2. Then, referring to FIG. 13, the two fiber-coiling members 2 are moved away from each other (see the arrows in FIG. 13) to tighten the optical fibers, and the locking screws 23 are tightened to fix the fiber-coiling members 2 again.

The present disclosure discloses the exemplary embodiments using specific terms, but the terms are merely used and should be merely interpreted as having general illustrative meanings, rather than for the purpose of limitation. Unless expressly stated, it is apparent to those of ordinary skill in the art that, in some examples, features, characteristics and/or elements described in connection with a particular embodiment can be used alone or in combination with features, characteristics and/or elements described in connection with other embodiments. Therefore, it should be understood by those of ordinary skill in the art that various changes in the forms and the details can be made without departing from the scope of the present disclosure of the appended claims.

## Claims

1. A fiber-coiling device, comprising a supporting member and at least two fiber-coiling members, wherein
the supporting member is provided with a slideway;
each of the at least two fiber-coiling members comprises a fiber-coiling column and a sliding block which are connected to each other; and
the fiber-coiling column is used for an optical fiber to coil around, and the sliding block is capable of sliding along the slideway and being positioned at any position of the slideway.

2. The fiber-coiling device of claim 1, wherein
the supporting member is in a shape of a plate; and
the slideway is a groove or a through groove formed in the supporting member.

3. The fiber-coiling device of claim 1, wherein
the slideway is provided at a plurality of positions in a first direction, and is provided at a plurality of positions in a second direction; and
the first direction and the second direction are both parallel to a surface where the slideway is located and cross each other.

4. The fiber-coiling device of claim 3, wherein
the slideway comprises a first slideway extending in the first direction and a second slideway extending in the second direction; and
the first slideway and the second slideway cross each other.

5. The fiber-coiling device of claim 4, wherein
the number of the first slideway is one; a number of second slideways is more than one; and
each second slideway crosses the first slideway.

6. The fiber-coiling device of claim 1, wherein
the number of the fiber-coiling members is at least three.

7. The fiber-coiling device of claim 1, wherein
a chute is provided at a side surface of the sliding block; and
the slideway comprises a convex edge extending into the chute.

8. The fiber-coiling device of claim 7, wherein
the sliding block comprises a first sheet and a second sheet disposed apart from each other; the first sheet is connected to the second sheet with a hollow connecting cylinder, and a space between the first sheet and the second sheet and outside the connecting cylinder forms the chute; and
internal threads are provided on an inner side of the connecting cylinder, and a locking screw matched with the internal threads is inserted into the connecting cylinder.

9. The fiber-coiling device of claim 1, wherein
a limiting protrusion is provided at an outer side surface of an end of the fiber-coiling column away from the supporting member.

10. A communication device assembly, comprising:
a communication device; and
at least one fiber-coiling device connected to the communication device, wherein the at least one fiber-coiling device is the fiber-coiling device of any one of claims 1 to 9.
